# FASCICULE DE BREVET EUROPEEN

(11) **EP 1 850 193 B1**
(45) Date de publication et mention de la délivrance du brevet: **12.06.2019**
(21) Numéro de dépôt: 06008901.8
(22) Date de dépôt: 28.04.2006
(51) Int. Cl.: F16B 4/00, G04B 17/32, G04D 3/00, G04B 13/02

(54) **Procédé de chassage d' une pièce dans une autre**
Verfahren zur Einpressung eines Teils in ein anderes Teil
Method of force fitting one piece in another piece

(43) Date de publication de la demande: 31.10.2007
(73) Titulaire: Patek Philippe SA Genève, 1204 Genève (CH)
(72) Inventeur: Musy, Jean-Pierre, 1268 Begnins (CH); Maier, Frédéric, 2000 Neuchatel (CH); Von Gunten, Stéphane, 2300 La Chaux-de-Fonds (CH)
(74) Mandataire: Micheli & Cie SA

(56) Documents cités:
- EP-A- 1 445 670
- EP-A- 1 513 029
- EP-A1- 0 732 635
- EP-A2- 0 107 939
- WO-A2-2004/029733
- DE-B- 1 295 284
- FR-A- 1 427 115

## Description

La présente invention concerne un procédé de chassage d'une première pièce dans une seconde pièce utilisé dans l'horlogerie tel que décrit dans FR1427115 et EP83306072.6. Par procédé de chassage on entend un procédé dans lequel la première pièce est assemblée à la seconde pièce en y étant entrée à force. La présente invention concerne plus particulièrement un procédé de chassage dans lequel la seconde pièce est faite dans une matière qui sensiblement ne se déforme pas plastiquement.

Dans un tel procédé, la première pièce exerce des contraintes sur la seconde pièce qui peuvent être très élevées. Ces contraintes peuvent endommager la seconde pièce, par exemple provoquer des éclats ou des fissures dans celle-ci. Lorsque de tels dommages se produisent, la qualité du serrage de la première pièce dans la seconde pièce chute, et la seconde pièce peut même se rompre définitivement.

La présente invention vise à remédier à cet inconvénient, ou au moins à l'atténuer, et propose à cette fin un procédé de chassage selon la revendication 1 annexée, un assemblage selon la revendication 9 et un mouvement d'horlogerie incorporant cet assemblage. Des modes de réalisation particuliers de l'invention sont définis dans les revendications dépendantes 2 à 8 et 10 à 23.

D'autres caractéristiques et avantages de la présente invention apparaîtront à la lecture de la description détaillée suivante faite en référence aux dessins annexés, dans lesquels :
- la figure 1 est une vue en perspective d'un spiral d'horlogerie fixé par son extrémité extérieure à un piton au moyen du procédé de chassage selon l'invention ;
- la figure 2 est une vue en coupe de l'extrémité extérieure du spiral assemblée au piton ;
- la figures 3 à 6 sont des vues en perspective de dessous, respectivement, d'une première, d'une seconde, d'une troisième et d'une quatrième variante de réalisation d'une pièce intermédiaire utilisée dans le procédé de chassage selon l'invention ;
- la figure 7 est une vue en coupe d'une roue fixée sur un axe par le procédé de chassage selon l'invention.

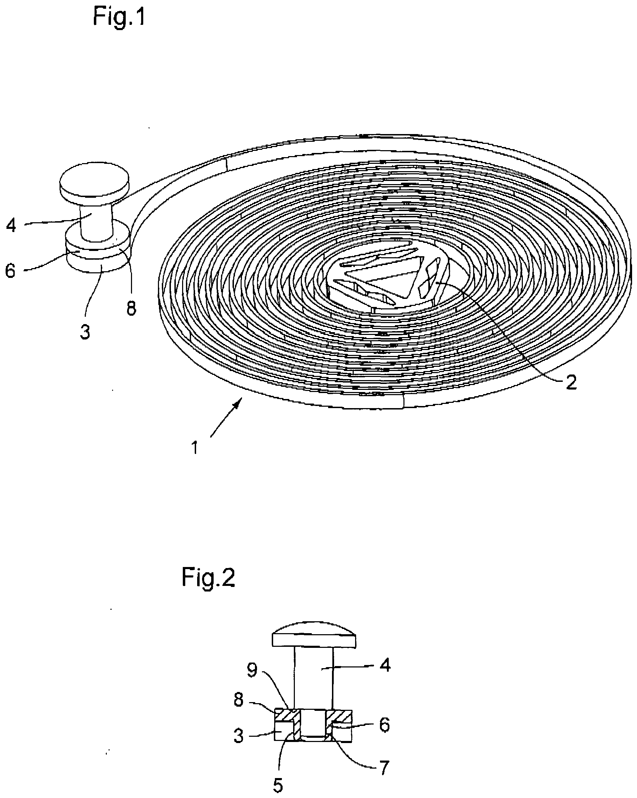

En référence aux figures 1 et 2, un ressort-spiral d'horlogerie 1, faisant partie d'un dispositif régulateur balancier-spiral d'un mouvement d'horlogerie, est monté sur l'axe du balancier (non représenté) par l'intermédiaire d'une virole 2, et est fixé par son extrémité extérieure 3 à un piton 4 de forme générale cylindrique monté sur une pièce fixe du mouvement, typiquement le coq (non représenté).

La fixation de l'extrémité extérieure 3 du spiral 1 au piton 4 est effectuée en chassant le piton 4 dans ladite extrémité extérieure 3. A cet effet, cette dernière présente une largeur plus grande que le reste du spiral 1, largeur qui lui confère une certaine rigidité, et comporte un trou traversant 5 destiné à recevoir le piton 4.

Conformément à l'invention, le chassage du piton 4 dans le trou 5 du spiral 1 s'effectue de la manière suivante. Une pièce intermédiaire annulaire déformable 6 est introduite dans le trou 5 du spiral 1 en y étant soit ajustée sans serrage soit légèrement chassée. La pièce intermédiaire 6 comporte un rebord ou collerette supérieur 8 qui vient s'appuyer contre la face supérieure de l'extrémité extérieure 3 du spiral 1 pour positionner axialement la pièce intermédiaire 6 dans le trou 5. Le piton 4 est ensuite chassé dans le trou central traversant, désigné par 7, de la pièce intermédiaire 6, ce qui déforme cette dernière et la serre entre le piton 4 et la paroi du trou 5, fixant ainsi le piton 4 dans le trou 5. Un épaulement 9 peut être prévu sur le piton 4, épaulement qui vient s'appuyer sur la face supérieure de la pièce intermédiaire 6 pour positionner axialement le piton 4 dans la pièce intermédiaire 6.

Une fois chassé dans l'extrémité extérieure 3 du spiral 1 comme décrit ci-dessus, le piton 4 est monté de manière connue en soi sur le coq du mouvement.

En se déformant lors du chassage du piton 4, la pièce intermédiaire 6 redistribue une partie des contraintes exercées par le piton 4, pour éviter que ces contraintes ne se concentrent en des points particuliers du spiral 1, notamment les arêtes. Les risques d'endommagement et de rupture du spiral 1 sont donc réduits.

Le spiral 1 est fait dans une matière fragile, c'est-à-dire une matière qui ne se déforme pas plastiquement, par exemple une matière à base de silicium. De préférence, la géométrie de la pièce intermédiaire 6 et la matière dans laquelle elle est faite permettent à la pièce intermédiaire 6 de se déformer plastiquement lors du chassage du piton 4. La matière de la pièce intermédiaire 6 est en outre préférentiellement plus molle que celle du spiral 1, c'est-à-dire a une limite élastique inférieure à celle de la matière du spiral 1. La pièce intermédiaire 6 peut ainsi bien occuper l'espace disponible dans le trou 5 voire même déborder un peu du trou 5 lorsque les contraintes reçues sont trop élevées. Des exemples de matières appropriées pour la pièce intermédiaire 6 sont des métaux mous ou plutôt mous tels que l'or, le laiton, le bronze, le nickel, le cuivre ou des alliages de ceux-ci. La pièce intermédiaire 6 peut être réalisée selon le procédé de lithographie et d'électrodéposition LIGA. Du fait de sa géométrie, le piton 4 peut être réalisé dans un grand nombre de matières, par exemple en acier.

On notera que le rebord 8 de la pièce intermédiaire 6, outre sa fonction de positionnement de la pièce intermédiaire 6 dans le trou 5 du spiral 1, augmente la surface d'appui entre la pièce intermédiaire 6 et l'extrémité extérieure 3 du spiral 1 ce qui permet de mieux distribuer les contraintes reçues lors du chassage du piton 4 dans le trou 7 de la pièce intermédiaire 6 et donc de réduire encore les risques d'endommagement et de rupture du spiral 1. Ce rebord 8 n'est néanmoins pas obligatoire et pourrait, en variante, être supprimé ou remplacé par une butée prévue dans le trou 5 du spiral 1.

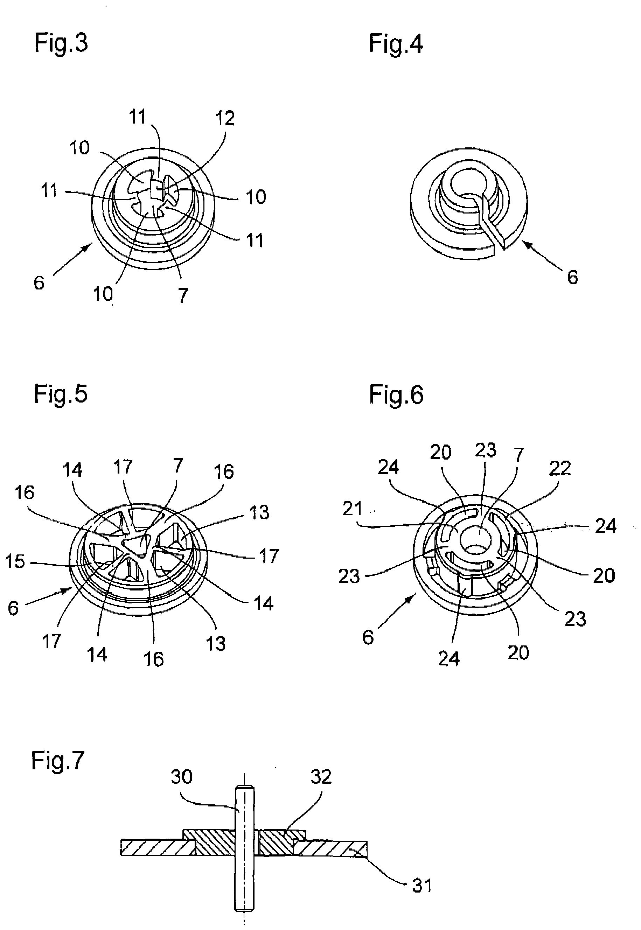

Les figures 3 à 6 montrent différentes variantes de réalisation de la pièce intermédiaire 6.

Dans la variante de la figure 3, la paroi du trou central 7 de la pièce intermédiaire 6 comporte des évidements 10 qui définissent des saillies radiales 11, au nombre de trois dans l'exemple illustré, régulièrement réparties les unes par rapport aux autres. Ces saillies 11 définissent chacune une face d'appui 12 contre laquelle s'appuie le piton 4 pendant et après le chassage. Les évidements 10 permettent l'écoulement de la matière déformée de la pièce intermédiaire 6 lors du chassage du piton 4.

Dans la variante de la figure 4, la pièce intermédiaire 6 est fendue de manière à diminuer sa raideur et augmenter ainsi les valeurs de force et de tolérance de chassage possibles.

Dans la variante de la figure 5, le trou central 7 de la pièce intermédiaire 6 a une forme triangulaire et la pièce intermédiaire 6 comprend des lumières 13 qui définissent une structure centrale constituée de trois bras flexibles 14 définissant la paroi du trou central 7, une partie périphérique cylindrique 15 entourant la structure centrale 14, trois bras de maintien radiaux 16 reliant les coins de la structure centrale 14 à la partie périphérique 15 et trois bras de compression radiaux 17 reliant la zone centrale, en contact avec le piton 4, de chaque bras flexible 14 à la partie périphérique 15. Lors du chassage du piton 4 dans le trou 7, les bras flexibles 14 se déforment et une grande partie de la force de déformation est transmise à la partie périphérique 15 par les bras de compression 17, ce qui déforme la partie périphérique 15 et la serre contre la paroi du trou 5 du spiral 1. Dans cette variante, les rigidités des bras flexibles 14 et des bras de compression 17 peuvent être ajustées par leurs géométries respectives, pour ajuster les valeurs de force de chassage. Il est également possible de dimensionner les bras de compression 17 pour qu'ils flambent lors du chassage, limitant ainsi la force de serrage à une valeur maximale souhaitée, indépendante des tolérances de chassage. Un tel effet peut également être obtenu avec la variante de la figure 3.

Dans la variante de la figure 6, la pièce intermédiaire 6 comporte des lumières 20 qui définissent une partie centrale cylindrique annulaire 21 comportant le trou central 7, une partie périphérique cylindrique 22 entourant la partie centrale 21, cette partie périphérique 22 étant plus mince, et donc plus souple, que la partie centrale 21, et des bras de liaison 23 reliant la partie centrale 21 à la partie périphérique 22. La pièce intermédiaire 6 comporte également sur la face externe de la partie périphérique 22 des faces d'appui bombées 24. Le chassage du piton 4 dans le trou 7 déforme la partie centrale 21 qui, par l'intermédiaire des bras de liaison 23, déforme la partie périphérique 22 pour serrer cette dernière contre la paroi du trou 5. Avec cette variante, il est possible d'obtenir un serrage fort du piton 4 dans la pièce intermédiaire 6 et un serrage moins fort de la pièce intermédiaire 6 dans le trou 5 du spiral 1.

Les variantes de pièce intermédiaire 6 illustrées aux figures 3 à 6 peuvent être réalisées dans les mêmes matières que la pièce intermédiaire 6 illustrée à la figure 2 et selon le même procédé de fabrication.

Bien qu'elle ait jusqu'ici été décrite dans le contexte de la fixation de l'extrémité extérieure d'un spiral à un piton dans un mouvement d'horlogerie, la présente invention n'est nullement limitée à cette application particulière. Il va de soi en effet que la présente invention peut s'appliquer dans d'autres contextes d'horlogerie. La figure 7 montre, à titre d'exemple, un axe 30 chassé dans une roue 31 selon le même principe que décrit ci-dessus, par l'intermédiaire d'une pièce 32 qui peut être identique à l'une des pièces intermédiaires 6 montrées aux figures 1 à 6 et qui, dans l'exemple illustré, correspond à la pièce 6 montrée à la figure 3.

La présente invention présente un intérêt particulier en ce qu'elle permet de chasser une pièce dans une autre pièce faite en une matière fragile telle que le silicium, la céramique, le diamant, le quartz, le verre, etc.

## Revendications

1. Procédé d'assemblage d'une première pièce (4) et d'une seconde pièce (3) dans le domaine de l'horlogerie, la seconde pièce (3) étant faite dans une matière qui sensiblement ne se déforme pas plastiquement, le procédé comprenant les étapes suivantes :
- introduire dans un premier trou (5) de la seconde pièce (3) une pièce intermédiaire déformable (6) comprenant un second trou (7), et
- entrer à force la première pièce (4) dans le second trou (7) de sorte à serrer la pièce intermédiaire (6) contre la paroi interne du premier trou (5) par déformation de la pièce intermédiaire (6).

2. Procédé selon la revendication 1, **caractérisé en ce que** la seconde pièce (3) est faite en une matière à base de silicium.

3. Procédé selon la revendication 1, **caractérisé en ce que** la seconde pièce (3) est faite en céramique, diamant, quartz ou verre.

4. Procédé selon l'une quelconque des revendications 1 à 3, **caractérisé en ce que** la pièce intermédiaire (6) est déformable plastiquement.

5. Procédé selon l'une quelconque des revendications 1 à 4, **caractérisé en ce que** la pièce intermédiaire (6) est faite en une matière ayant une limite élastique inférieure à celle de la matière dans laquelle est faite la seconde pièce (3).

6. Procédé selon l'une quelconque des revendications 1 à 5, **caractérisé en ce que** la pièce intermédiaire (6) est faite en métal.

7. Procédé selon la revendication 6, **caractérisé en ce que** la pièce intermédiaire (6) est faite en or, laiton, bronze, nickel, cuivre ou un alliage de l'un de ces métaux.

8. Procédé selon l'une quelconque des revendications 1 à 7, **caractérisé en ce que** la pièce intermédiaire (6) comporte un rebord (8) qui, après que la pièce intermédiaire (6) a été introduite dans le premier trou (5), s'appuie contre la seconde pièce (3) dans la direction du chassage.

9. Assemblage d'une première pièce (4) et d'une seconde pièce (3) pour l'horlogerie, la seconde pièce (3) étant faite dans une matière qui sensiblement ne se déforme pas plastiquement, la seconde pièce (3) comportant un premier trou (5) dans lequel est introduite la première pièce (4), l'assemblage comprenant en outre une pièce intermédiaire (6) introduite dans le premier trou (5) et comprenant un second trou (7) dans lequel est entrée à force la première pièce (4), la pièce intermédiaire (6) étant déformée et serrée contre la paroi interne du premier trou (5) par la première pièce (4).

10. Assemblage selon la revendication 9, **caractérisé en ce que** la seconde pièce (3) est faite en une matière à base de silicium.

11. Assemblage selon la revendication 9, **caractérisé en ce que** la seconde pièce (3) est faite en céramique, diamant, quartz ou verre.

12. Assemblage selon l'une quelconque des revendications 9 à 11, **caractérisé en ce que** la pièce intermédiaire (6) est déformée plastiquement.

13. Assemblage selon l'une quelconque des revendications 9 à 12, caractérisé la pièce intermédiaire (6) est faite en une matière ayant une limite élastique inférieure à celle de la matière dans laquelle est faite la seconde pièce (3).

14. Assemblage selon l'une quelconque des revendications 9 à 13, caractérisé la pièce intermédiaire (6) est faite en métal.

15. Assemblage selon la revendication 14, **caractérisé en ce que** la pièce intermédiaire (6) est faite en or, laiton, bronze, nickel, cuivre ou un alliage de l'un de ces métaux.

16. Assemblage selon l'une quelconque des revendications 9 à 15, **caractérisé en ce que** la pièce intermédiaire (6) comporte un rebord (8) qui s'appuie contre la seconde pièce (3).

17. Assemblage selon l'une quelconque des revendications 9 à 16, **caractérisé en ce que** la paroi du second trou (7) comporte des évidements (10) qui définissent des saillies radiales (11) contre lesquelles s'appuie la première pièce (4).

18. Assemblage selon l'une quelconque des revendications 9 à 16, **caractérisé en ce que** la pièce intermédiaire (6) est fendue.

19. Assemblage selon l'une quelconque des revendications 9 à 16, **caractérisé en ce que** la pièce intermédiaire (6) comporte des lumières (13) qui définissent une partie centrale comprenant des bras flexibles (14) définissant le second trou (7), une partie périphérique (15) entourant la partie centrale (14), et des seconds bras (17) reliant une zone de chaque bras flexible (14) en contact avec la première pièce (4) à la partie périphérique (15).

20. Assemblage selon la revendication 19, **caractérisé en ce que** les lumières (13) définissent en outre des troisièmes bras (16) reliant des coins de la partie centrale (14) à la partie périphérique (15).

21. Assemblage selon l'une quelconque des revendications 9 à 16, **caractérisé en ce que** la pièce intermédiaire (6) comporte des lumières (20) qui définissent une partie centrale (21) comportant le second trou (7), une partie périphérique (22) entourant la partie centrale (21), cette partie périphérique (22) étant plus souple que la partie centrale (21), et des bras (23) reliant la partie centrale (21) à la partie périphérique (22).

22. Assemblage selon l'une quelconque des revendications 9 à 21, **caractérisé en ce que** la première pièce (4) est un piton d'horlogerie, la seconde pièce (1) est un spiral d'horlogerie et le premier trou (5) est formé dans l'extrémité extérieure (3) du spiral (1).

23. Assemblage selon l'une quelconque des revendications 9 à 21, **caractérisé en ce que** la première pièce est un axe (30) et la seconde pièce est une roue (31).

24. Mouvement d'horlogerie comprenant un assemblage selon l'une quelconque des revendications 9 à 23.

## Patentansprüche

1. Verfahren zum Zusammenbauen eines ersten Teils (4) und eines zweiten Teils (3) auf dem Gebiet der Uhrmacherei, wobei das zweite Teil (3) aus einem Material hergestellt ist, das sich im Wesentlichen nicht plastisch verformt, wobei das Verfahren die folgenden Schritte umfasst:
- Einführen eines verformbaren Zwischenteils (6), das ein zweites Loch (7) umfasst, in ein erstes Loch (5) des zweiten Teils (3),
- Hineinzwängen des ersten Teils (4) in das zweite Loch (7), derart, dass das Zwischenteil (6) durch Verformung des Zwischenteils (6) gegen die Innenwand des ersten Lochs (5) geklemmt wird.

2. Verfahren nach Anspruch 1, **dadurch gekennzeichnet, dass** das zweite Teil (3) aus einem Material auf Siliziumbasis hergestellt ist.

3. Verfahren nach Anspruch 1, **dadurch gekennzeichnet, dass** das zweite Teil (3) aus Keramik, Diamant, Quarz oder Glas hergestellt ist.

4. Verfahren nach einem der Ansprüche 1 bis 3, **dadurch gekennzeichnet, dass** das Zwischenteil (6) plastisch verformbar ist.

5. Verfahren nach einem der Ansprüche 1 bis 4, **dadurch gekennzeichnet, dass** das Zwischenteil (6) aus einem Material hergestellt ist, das eine Elastizitätsgrenze aufweist, die niedriger ist als diejenige des Materials, aus dem das zweite Teil (3) hergestellt ist.

6. Verfahren nach einem der Ansprüche 1 bis 5, **dadurch gekennzeichnet, dass** das Zwischenteil (6) aus Metall hergestellt ist.

7. Verfahren nach Anspruch 6, **dadurch gekennzeichnet, dass** das Zwischenteil (6) aus Gold, Messing, Bronze, Nickel, Kupfer oder einer Legierung eines dieser Metalle hergestellt ist.

8. Verfahren nach einem der Ansprüche 1 bis 7, **dadurch gekennzeichnet, dass** das Zwischenteil (6) einen Rand (8) umfasst, der, nachdem das Zwischenteil (6) in das erste Loch (5) eingeführt wurde, in der Richtung der Einpressung gegen das zweite Teil (3) aufliegt.

9. Baugruppe aus einem ersten Teil (4) und einem zweiten Teil (3) für die Uhrmacherei, wobei das zweite Teil (3) aus einem Material hergestellt ist, das sich im Wesentlichen nicht plastisch verformt, wobei das zweite Teil (3) ein erstes Loch (5) umfasst, in das das erste Teil (4) eingeführt wird, wobei die Baugruppe ferner ein Zwischenteil (6) umfasst, das in das erste Loch (5) eingeführt wird, und ein zweites Loch (7) umfasst, in das das erste Teil (4) hineingezwängt wird, wobei das Zwischenteil (6) durch das erste Teil (4) verformt und gegen die Innenwand des ersten Lochs (5) geklemmt wird.

10. Baugruppe nach Anspruch 9, **dadurch gekennzeichnet, dass** das zweite Teil (3) aus einem Material auf Siliziumbasis hergestellt ist.

11. Baugruppe nach Anspruch 9, **dadurch gekennzeichnet, dass** das zweite Teil (3) aus Keramik, Diamant, Quarz oder Glas hergestellt ist.

12. Baugruppe nach einem der Ansprüche 9 bis 11, **dadurch gekennzeichnet, dass** das Zwischenteil (6) plastisch verformt wird.

13. Baugruppe nach einem der Ansprüche 9 bis 12, **dadurch gekennzeichnet, dass** das Zwischenteil (6) aus einem Material hergestellt ist, das eine Elastizitätsgrenze aufweist, die niedriger als diejenige des Materials ist, aus dem das zweite Teil (3) hergestellt ist.

14. Baugruppe nach einem der Ansprüche 9 bis 13, **dadurch gekennzeichnet, dass** das Zwischenteil (6) aus Metall hergestellt ist.

15. Baugruppe nach Anspruch 14, **dadurch gekennzeichnet, dass** das Zwischenteil (6) aus Gold, Messing, Bronze, Nickel, Kupfer oder einer Legierung eines dieser Metalle hergestellt ist.

16. Baugruppe nach einem der Ansprüche 9 bis 15, **dadurch gekennzeichnet, dass** das Zwischenteil (6) einen Rand (8) umfasst, der gegen das zweite Teil (3) aufliegt.

17. Baugruppe nach einem der Ansprüche 9 bis 16, **dadurch gekennzeichnet, dass** die Wand des zweiten Loches (7) Aushöhlungen (10) umfasst, die radiale Vorsprünge (11) definieren, gegen die das erste Teil (4) aufliegt.

18. Baugruppe nach einem der Ansprüche 9 bis 16, **dadurch gekennzeichnet, dass** das Zwischenteil (6) gespalten ist.

19. Baugruppe nach einem der Ansprüche 9 bis 16, **dadurch gekennzeichnet, dass** das Zwischenteil (6) Öffnungen (13), die einen mittleren Teil definieren, der biegsame Arme (14) umfasst, die das zweite Loch (7) definieren, einen peripheren Teil (15), der den mittleren Teil (14) umgibt, und zweite Arme (17) umfasst, die eine Zone von jedem biegsamen Arm (14) im Kontakt mit dem ersten Teil (4) mit dem peripheren Teil (15) verbinden.

20. Baugruppe nach Anspruch 19, **dadurch gekennzeichnet, dass** die Öffnungen (13) ferner dritte Arme (16) definieren, die Kanten des mittleren Teils (14) mit dem peripheren Teil (15) verbinden.

21. Baugruppe nach einem der Ansprüche 9 bis 16, **dadurch gekennzeichnet, dass** das Zwischenteil (6) Öffnungen (20), die einen mittleren Teil (21) definieren, der das zweite Loch (7) umfasst, einen peripheren Teil (22), der den mittleren Teil (21) umgibt, wobei dieser periphere Teil (22) nachgiebiger ist als der mittlere Teil (21), und Arme (23) umfasst, die den mittleren Teil (21) mit dem peripheren Teil (22) verbinden.

22. Baugruppe nach einem der Ansprüche 9 bis 21, **dadurch gekennzeichnet, dass** das erste Teil (4) ein Spiralklötzchen für die Uhrmacherei ist, wobei das zweite Teil (1) eine Spiralfeder für die Uhrmacherei ist und das erste Loch (5) in dem äußeren Ende (3) der Spiralfeder (1) gebildet ist.

23. Baugruppe nach einem der Ansprüche 9 bis 21, **dadurch gekennzeichnet, dass** das erste Teil eine Welle (30) ist und das zweite Teil ein Rad (31) ist.

24. Uhrwerk, das eine Baugruppe nach einem der Ansprüche 9 bis 23 umfasst.

## Claims

1. Method for assembling a first piece (4) and a second piece (3) in the field of watchmaking/clockmaking, the second piece (3) being made of a material which substantially does not deform plastically, the method comprising the following steps:
- introducing into a first hole (5) of the second piece (3) a deformable intermediate piece (6) comprising a second hole (7), and
- forcibly inserting the first piece (4) into the second hole (7) so as to clamp the intermediate piece (6) against the inner wall of the first hole (5) by deformation of the intermediate piece (6).

2. Method as claimed in claim 1, **characterised in that** the second piece (3) is made of a silicon-based material.

3. Method as claimed in claim 1, **characterised in that** the second piece (3) is made of ceramic, diamond, quartz or glass.

4. Method as claimed in any one of claims 1 to 3, **characterised in that** the intermediate piece (6) is plastically deformable.

5. Method as claimed in any one of claims 1 to 4, **characterised in that** the intermediate piece (6) is made of a material having an elastic limit lower than that of the material from which the second piece (3) is made.

6. Method as claimed in any one of claims 1 to 5, **characterised in that** the intermediate piece (6) is made of metal.

7. Method as claimed in claim 6, **characterised in that** the intermediate piece (6) is made of gold, brass, bronze, nickel, copper or an alloy of one of these metals.

8. Method as claimed in any one of claims 1 to 7, **characterised in that** the intermediate piece (6) comprises an edge (8) which, after the intermediate piece (6) has been introduced into the first hole (5), is supported against the second piece (3) in the driving-in direction.

9. Assembly of a first piece (4) and a second piece (3) for watchmaking/clockmaking, the second piece (3) being made of a material which substantially does not deform plastically, the second piece (3) comprising a first hole (5) into which the first piece (4) is introduced, the assembly further comprising an intermediate piece (6) introduced into the first hole (5) and comprising a second hole (7), into which the first piece (4) is forcibly inserted, the intermediate piece (6) being deformed and clamped against the inner wall of the first hole (5) by the first piece (4).

10. Assembly as claimed in claim 9, **characterised in that** the second piece (3) is made of a silicon-based material.

11. Assembly as claimed in claim 9, **characterised in that** the second piece (3) is made of ceramic, diamond, quartz or glass.

12. Assembly as claimed in any one of claims 9 to 11, **characterised in that** the intermediate piece (6) is plastically deformed.

13. Assembly as claimed in any one of claims 9 to 12, **characterised in that** the intermediate piece (6) is made of a material having an elastic limit lower than that of the material from which the second piece (3) is made.

14. Assembly as claimed in any one of claims 9 to 13, **characterised in that** the intermediate piece (6) is made of metal.

15. Assembly as claimed in claim 14, **characterised in that** the intermediate piece (6) is made of gold, brass, bronze, nickel, copper or an alloy of one of these metals.

16. Assembly as claimed in any one of claims 9 to 15, **characterised in that** the intermediate piece (6) comprises an edge (8) which is supported against the second piece (3).

17. Assembly as claimed in any one of claims 9 to 16, **characterised in that** the inner wall of the second hole (7) comprises recesses (10) which define radial protrusions (11) against which the first piece (4) is supported.

18. Assembly as claimed in any one of claims 9 to 16, **characterised in that** the intermediate piece (6) is split.

19. Assembly as claimed in any one of claims 9 to 16, **characterised in that** the intermediate piece (6) comprises openings (13) which define a central part comprising flexible arms (14) defining the second hole (7), a peripheral part (15) surrounding the central part (14), and second arms (17) connecting a zone of each flexible arm (14) in contact with the first piece (4) to the peripheral part (15).

20. Assembly as claimed in claim 19, **characterised in that** the openings (13) further define third arms (16) connecting corners of the central part (14) to the peripheral part (15).

21. Assembly as claimed in any one of claims 9 to 16, **characterised in that** the intermediate piece (6) comprises openings (20) which define a central part (21) having the second hole (7), a peripheral part (22) surrounding the central part (21), this peripheral part (22) being more flexible than the central part (21), and arms (23) connecting the central part (21) to the peripheral part (22).

22. Assembly as claimed in any one of claims 9 to 21, **characterised in that** the first piece (4) is a timepiece balance spring stud, the second piece (1) is a timepiece balance spring, and the first hole (5) is formed in the outer end (3) of the balance spring (1).

23. Assembly as claimed in any one of claims 9 to 21, **characterised in that** the first piece is a shaft (30) and the second piece is a wheel (31).

24. Timepiece movement comprising an assembly as claimed in any one of claims 9 to 23.
